Europäisches Patentamt

European Patent Office

Office européen des brevets

(11) Publication number: 0 391 326 A2

# EUROPEAN PATENT APPLICATION

(21) Application number: 90106326.3

(22) Date of filing: 03.04.90

(51) Int. Cl.5: H01P 1/15, G01S 7/03

(30) Priority: 03.04.89 IT 4780789

(43) Date of publication of application:
10.10.90 Bulletin 90/41

(84) Designated Contracting States:
AT CH DE FR GB LI NL SE

(71) Applicant: SELENIA INDUSTRIE
ELETTRONICHE ASSOCIATE S.p.A.
Via Tiburtina, KM 12.400
I-00131 Roma(IT)

(72) Inventor: Di Gesaro, Giuseppe
Via della Rustica 31
I-00137 Roma(IT)
Inventor: Rossi Espagnet, Claudio
Viale Pinturicchio 31
I-00196 Roma(IT)

(74) Representative: Gustorf, Gerhard, Dipl.-Ing.
Patentanwalt Dipl.-Ing. Gerhard Gustorf
Bachstrasse 6 A
D-8300 Landshut(DE)

(54) **Microwave switch for the protection of devices in cascade, effective even with equipment turned off.**

(57) Microwave switch for the protection of devices downstream, effective even with equipment turned off. Preferred applications are in the electronics field, and more precisely in that of radar receivers.

It consists of two input poses (1) and (2) which are connected to a transmission line along which, at a suitable distance, two more or even more tan two further transmission lines (3),(4), and (5), and (6) are connected with a suitable length, ending with pin diodes (7), (8), (9) and (10) . The device is also equipped with a protection device which is particularly well suited to operate with considerably long radar pulses such as those of modern solid state equipment.

Fig. 1

The invention regards a switch to be connected to the input of radar equipment or other similar in the receiver, with the purpose of protecting the devices downstream, which could be damaged by re-entering transmitted signal.

During this description, for convenience purposes, specific technical terms will be adopted, which are well known to the experts in the field.

Previous solutions adopted pin diodes or limiters, placed in parallel with the transmission line. The former suffered the drawback of not protectring the receiver when the equipment is switched off; the latter suffered of the inconvenience of not bearing too high average power levels.

The invention belongs to the field of electronic devices, and more precisely to the radar field and to all the equipment which requires a protective function in presence of radiofrequency pulses , a protection with equipment switched off in the presence of signals of any kind and origin and a capability of inserting an attenuation to increase the dynamic level of the receiver or for protection against intentional jamming.

As anexample lets consider two ships when close to each other, one with its radar switched on and the other switched off.

The input stage of any radar receiver is always equipped with a switch which has the purpose of protecting the low noise amplifier and the mixer from radio frequency signals coming from the equipment transmitter and from high intensity signals of any type and origin.

Usually such device consists of pin diodes in parallel with the transmission line carrying the signal received. When the diodes are polarized, the line is short circuited reflecting the signals which would damage the receiver. Usually limiter diodes are also fitted, which do not require any external bias to reflect the signal above a given threshold, therefore protecting the equipment even when switched off (this is the typical case of a ship in harbour with equipment switched off close to other ships with radars powered up).

The greater problems which arise in the adoption of limiter diodes is the compromise between power level manageable and switching speed. In fact a fast limiter diode with low intervention threshold cannot bear high power levels.

Moreover, as these diodes have low thermal rating, they are inadequate whenusing transmission pulses with high duty cycle (ratio between transmission time and time between two consecutive transmitted pulses) or long RF pulses such as those of modern solid state transmitters.

Finally, the adoption of switches with diodes in series with the line, which would solve the problem of protecting the equipment when switched off, suffers of difficulties in installing the diodes to achieve efficient heat transfer and in practice, high isolation values would not be obtainable when the power level exceeds a few watts.

In the case illustrated here, use is made of diodes inserted in parallel to transmission lines, therefore in the best thermal exchange configuration.

The protective function with equipment switched off is obtained by means of a circuit configuration which inserts a short circuit onto the transmission line when the diode is not crossed by any current.

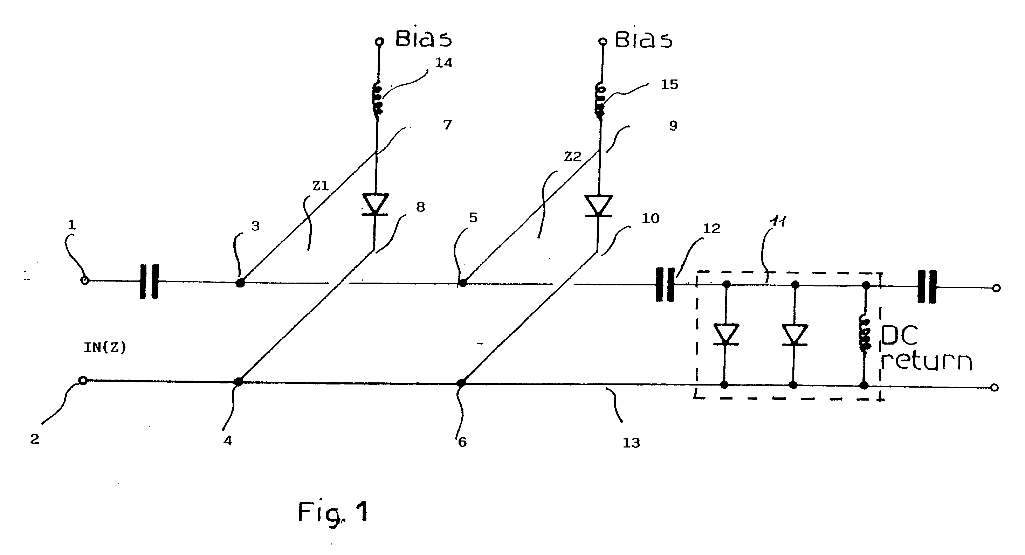

The invention will now be described for illustrative, non limiting purposes, with reference to the enclosed graphic table. Figure 1 shows a schematic diagram of the switch, which shows:
Z main transmission line;
1,2 input posts;
3,4 input of the parallel transmission line;
5,6 input of the parallel transmission line;
7,8 pin diode;
9,10 pin diode;
11 is the schematic diagram of a conventional limiter;
12,13 input of the limiter;
14,15 biasing circuit of the pin diode.

The device will now be described in operation, still with illustrative but not limiting purposes.

It consists of two functional parts. The first is the innovative part which consists of transmission lines in parallel with the main line (stubs), 3,4 Z1 5,6 Z2, terminating on pin diodes at a suitable distance. The number of such stubs fixes the component bandwidth (this problem is solved by making use of suitable algorithms, using CAD, to synthesize the network) but clearly this is not tightly in reletion with the operating principle.

When diodes 7,8,9 and 10 are traversed by biasing current 14, 15 the device is transparent to radiofrequency, because in parallel with the transmission line Z high impedances appear. When diodes 7,8,9 and 10 are off, therefore also when the equipment is switched off, very low impedances are found in parallel with the Z line, so as to reflect the incoming signal.

Dimensioning of the component, and in particular the selection of the diode and of the Z1 and Z2 stubs, must be made on the basis of system specifications, as a compromise between various parameters has to be struck, such as insertion loss, isolation, dissipated power, voltage on the diode.

The second part of the component consists of a conventional limiter 11 so as to protect the equipment even from radiofrequency signals received with equpment switched off, even if outside the device bandwidth, or even from high power signals when the receiver is activated.

When the radar is in transmission, the diodes are off, while when the radar is receiving, the diodes are on (classical transmit/receive operation).

It is moreover possible to keep the diodes turned off even during reception, so as to insert an additional attenuation.

Quite clearly, the solution adopted can offer equipment protection, by suitable dimensioning of the components, even from very high radio frequency power levels and relatively long duration, a feature which cannot be met by limiter diodes due to the very high thermal resistances incompatible with very long pulses.

A limiter diode can typically bear incident power levels of the order of the kW only with a duty factor less than 1% and pulses of the order of the micro second.

In the presence of very long pulses,the CW case must be considered, where power levels of the order of a few tens of Watts are possible by suitable circuit arrangements (paralleled diodes). The adoption of the device presented herein can overcome such limitations, adopting pin diodes, with thermal time constants much larger and therefore substantially lower impulsed thermal resistances.

In conclusion, the microwave switch with protective charactreristics with un powered equipment acts as a radio frequency switch for pulsed equipment with the protection of the receiver with equipment switched off, and this protection is assured even with Continuous Wave equipment,(diodes always on when the equipment is in operation).

It is also possible to insert on the return path an attenuation to increase the dynamic level of the receiver or for protection against intentional jamming interference which could saturate an unprotected receiver.

Producibility, setting up and maintenance are those typical of stub chip diode switches in parallel to transmission lines,while the circuit does not present any substantial difference with respect to the manufacturing of a traditional switch.

For this device, design and implementation technologies are available up to the X band. In this sense the device is more a new product than an innovation, as it makes use of a suitable circuit device to assure very high quality operating characteristics and high systems utilization.

## Claims

1. Microwave switch for electronic applications, to be preferably adopted for reception purposes, characterized by the fact that it includes pin diodes (7), (8), (9), (10) set in parallel onto the terminations of transmission lines (Z1), (Z2), which are in parallel to the main transmission line Z.

2. Microwave switch as per Claim 1, characterized by the presence of a limiter (11).

3. Microwave switch, as per the claims above, characterized by the fact that the limiter is placed downstream from the main transmission line Z.

Fig. 1

EP 0 391 326 A2